# EUROPÄISCHE PATENTSCHRIFT

(11) **EP 3 120 535 B1**
(45) Veröffentlichungstag und Bekanntmachung des Hinweises auf die Patenterteilung: **23.09.2020**
(21) Anmeldenummer: 15710789.7
(22) Anmeldetag: 19.03.2015
(51) Int. Cl.: H04N 1/195, H04N 1/028

(54) **VORRICHTUNG UND VERFAHREN ZUR OPTISCHEN ERFASSUNG EINES DOKUMENTS UND VERFAHREN ZUR HERSTELLUNG EINER SOLCHEN VORRICHTUNG**
DEVICE AND METHOD FOR OPTICALLY DETECTING A DOCUMENT AND METHOD FOR FABRICATION OF SAID DEVICE
DISPOSITIF ET PROCEDE DE MESURE OPTIQUE D'UN DOCUMENT ET PROCÉDÉ POUR LA FABRICATION D'UN TEL DISPOSITIF

(30) Priorität: 21.03.2014 DE 102014205363
(43) Veröffentlichungstag der Anmeldung: 25.01.2017
(73) Patentinhaber: Bundesdruckerei GmbH, 10969 Berlin (DE)
(72) Erfinder: RABELER, Uwe, 30453 Hannover (DE); WOLF, Andreas, 07743 Jena (DE); THATER, Marcel, 30952 Ronnenberg (DE); MAGGIONI, Christoph, 10961 Berlin (DE); KESSLER, Horst, 10317 Berlin (DE)
(74) Vertreter: Ramrath, Lukas
(86) Internationale Anmeldenummer: PCT/EP2015/055756
(87) Internationale Veröffentlichungsnummer: WO 2015/140242

(56) Entgegenhaltungen:
- DE-A1-102012 211 076
- DE-B3-102007 031 230
- US-A1- 2002 057 846
- Chul Young ET AL: "Optimized pattern design of light-guide plate (LGP)", Optica Applicata, 8. Februar 2011 (2011-02-08), XP055188120, Gefunden im Internet: URL:http://www.if.pwr.wroc.pl/~optappl/pdf /2011/no4/optappl_4104p863.pdf [gefunden am 2015-05-07]

## Beschreibung

Die Erfindung betrifft eine Vorrichtung und ein Verfahren zur optischen Erfassung eines Dokuments, insbesondere eines Sicherheitsdokuments. Weiter betrifft die Erfindung ein Verfahren zur Herstellung der vorhergehend angeführten Vorrichtung.

Aus dem Stand der Technik ist es bekannt, Dokumente, beispielsweise Reisepässe, mittels einer oder mehrerer Kameras zu erfassen. Für die optische Erfassung des Dokuments kann eine Abbildungsoptik benötigt werden. Hierfür kann eine Vorrichtung zur Dokumentenerfassung, insbesondere ein Dokumentenprüfgerät, ein Optikmodul umfassen, in dem eine starr montierte Kamera eine gesamte Fläche eines auf einer Auflagefläche aufgelegten Dokumentes erfasst.

So beschreibt die DE 10 2007 031 230 B3 ein Dokumentenerfassungssystem zum optischen Erfassen eines Dokuments, umfassend mindestens ein Leuchtmittel zum Beleuchten des Dokuments, wobei das mindestens eine Leuchtmittel mit einer Ausleuchtungsoptik gekoppelt ist, die eine homogene Ausleuchtung des Dokuments ermöglicht. Weiter umfasst das Dokumentenerfassungssystem mindestens einen optischen Sensor und eine Abbildungsoptik zum Abbilden des Dokuments auf den mindestens einen optischen Sensor. Hierbei wird das zu erfassende Dokument auf eine Auflagefläche aufgelegt, wobei die Auflagefläche relativ zu einem Gehäuse des Dokumentenerfassungssystems ortsfest ist.

Die DE 10 2012 211 076.3 (noch nicht veröffentlicht) offenbart eine Vorrichtung zur Dokumentenerfassung, wobei die Vorrichtung mindestens eine Einrichtung zur Bilderfassung umfasst. Weiter ist eine Durchleuchtungseinrichtung offenbart, wobei das mindestens eine Mittel zur Bilderfassung und die mindestens eine Durchleuchtungseinrichtung derart zueinander angeordnet sind, dass von der mindestens einen Einrichtung zur Bilderfassung Licht erfassbar ist, welches von der mindestens einen Durchleuchtungseinrichtung durch die Auflagefläche gestrahlt wird.

Die DE 697 23 542 T2 bezieht sich auf einen Bildsensor, wobei insbesondere eine Lichtquelle zur Beleuchtung eines abzutastenden Bildes in die Struktur des Bildsensors integriert ist.

Das Dokument "Chul Young et. al., Optimized pattern design of light-guide plate (LGP), Optica Applicata, 8.02.2011, XP55188120, URL: http://www.if.pwr.wroc.pl/~optappl/pdf/2011/no4/optappl 4104p863.pdf" offenbart eine Hintergrundbeleuchtungseinheit, die in der Regel hinter einem LCD-Bildschirm angeordnet ist. Eine typische Hintergrundbeleuchtungseinheit besteht aus einer Lichtleitplatte, einem Diffusionsbogen, zwei prismatischen Bögen, einem Reflektor und einer Lichtquelle, die am Rand der Lichtleitplatte angeordnet ist.

Es ist wünschenswert, das zu erfassende Dokument für eine optische Erfassung hinreichend und möglichst homogen zu beleuchten. Eine homogene Beleuchtung erfordert in der Regel eine Vielzahl von Beleuchtungseinrichtungen und möglichst große Abstände zur Dokumentenauflage, da sich in diesem Fall wenig oder gar keine Reflexionen ergeben. Dies wiederum bedingt in der Regel einen hohen Bauraumbedarf, insbesondere wenn Dokumente verschiedener Formate zu erfassen sind.

Da es auch wünschenswert sein kann, eine optische Erfassung eines Dokuments bei Beleuchtung in verschiedenen Spektralbereichen (Weißlicht, IR und UV) durchzuführen, kann es notwendig sein, hierfür erforderliche optische Sensoren, Leuchtmittel und gegebenenfalls Objektive vorzusehen. Dies wiederum bedingt einen steigenden Bauraumbedarf des Dokumentenerfassungssystems.

Es stellt sich das technische Problem, eine Vorrichtung und ein Verfahren zur optischen Erfassung eines Dokuments, insbesondere eines Sicherheitsdokuments, zu schaffen, welche eine möglichst homogene Beleuchtung des zu erfassenden Dokuments ermöglichen und gleichzeitig einen Bauraumbedarf reduzieren. Ein weiteres technisches Problem besteht darin, ein Verfahren zur Herstellung einer derartigen Vorrichtung zu schaffen.

Die Lösung des technischen Problems ergibt sich durch die Gegenstände mit den Merkmalen der Ansprüche 1, 12 und 14. Weitere vorteilhafte Ausgestaltungen der Erfindung ergeben sich aus den Unteransprüchen.

Es ist eine Grundidee der Erfindung, Licht in ein flach ausgebildetes Lichtleitelement, insbesondere ein folienartiges Lichtleitelement, einzukoppeln und das eingekoppelte Licht an einer ersten Oberfläche zur Beleuchtung des Dokuments auszukoppeln. Das reflektierte Licht kann dann optisch erfasst werden, um das gewünschte Abbild der Oberflächenstruktur des Dokuments zu erzeugen.

Vorgeschlagen wird eine Vorrichtung zur optischen Erfassung eines Dokuments, insbesondere eines Sicherheitsdokuments.

Als Sicherheitsdokument kann jedes Dokument bezeichnet werden, das eine physikalische Entität ist, die gegen ein unautorisiertes Herstellen und/oder Verfälschen durch Sicherheitsmerkmale oder -elemente geschützt sind. Sicherheitsmerkmale sind solche Merkmale, die ein Verfälschen und/oder Duplizieren gegenüber einem einfachen Kopieren zumindest erschweren. Physikalische Entitäten, die ein Sicherheitsmerkmal umfassen oder ausbilden, können als Sicherheitselemente bezeichnet werden. Ein Sicherheitsdokument kann mehrere Sicherheitsmerkmale und/oder Sicherheitselemente umfassen oder ausbilden. Im Sinne der hier festgelegten Definition stellt ein Sicherheitsdokument auch immer ein Sicherheitselement dar. Beispiele für Sicherheitsdokumente, welche auch Wertdokumente umfassen, die einen Wert repräsentieren, umfassen beispielsweise Reisepässe, Personalausweise, Führerscheine, Identitätskarten, Zutrittskontrollausweise, Krankenkassenkarten, Banknoten, Postwertzeichen, Bankkarten, Kreditkarten, Smartcards, Tickets und Etiketten.

Die Vorrichtung weist mindestens ein Aufnahmevolumen mit einer Auflagefläche für das zu erfassende Dokument auf oder bildet ein solches Aufnahmevolumen aus. Zur optischen Erfassung ist das zu erfassenden Dokument in dem Aufnahmevolumen anzuordnen, insbesondere auf die Auflagefläche aufzulegen. Das Aufnahmevolumen, insbesondere auch die Auflagefläche, kann in einem Erfassungsbereich einer Bilderfassungseinrichtung der Vorrichtung angeordnet sein. Das Aufnahmevolumen kann zu einer Seite von der Auflagefläche begrenzt sein und insbesondere das über der Auflagefläche angeordnete Volumen, beispielsweise mit einer vorbestimmten Höhe, bezeichnen. Das Aufnahmevolumen kann eine vorbestimmte Länge, Breite und/oder Höhe aufweisen.

Weiter umfasst die Vorrichtung mindestens eine Beleuchtungseinrichtung. Mittels der Beleuchtungseinrichtung kann Licht mit einem vorbestimmten Spektrum erzeugt werden. Die Beleuchtungseinrichtung kann hierbei ein beliebiges Leuchtmittel, insbesondere aber zumindest eine Beleuchtungsquelle, z.B. eine LED oder eine ähnliche Beleuchtungsquelle, aufweisen, um Licht zu erzeugen.

Weiter umfasst die Vorrichtung mindestens ein Lichtleitelement. Das Lichtleitelement bezeichnet hierbei ein Element, in dem Licht der Beleuchtungseinrichtung geführt oder geleitet werden kann. Insbesondere kann das Lichtleitelement aus einem Material oder einer Materialmischung bestehen, das/die einen vorbestimmten Brechungsindex und/oder eine vorbestimmte Ausbreitungsgeschwindigkeit für Licht, insbesondere für Licht mit einem vorbestimmten Spektrum, weiter insbesondere für das von der mindestens einen Beleuchtungseinrichtung erzeugte Licht, aufweist. Das Lichtleitelement kann insbesondere flach ausgebildet sein, d.h. eine geringe geometrische Höhe bzw. Dicke aufweisen. Insbesondere kann das Lichtleitelement als Folie ausgebildet sein.

Weiter weist das Lichtleitelement eine erste Oberfläche auf. Die erste Oberfläche kann hierbei vorbestimmte geometrische Abmaße, insbesondere eine vorbestimmte Länge und eine vorbestimmte Breite, aufweisen. Auch kann die erste Oberfläche eine vorbestimmte Struktur, insbesondere eine vorbestimmte Oberflächenstruktur, aufweisen.

Die erste Oberfläche kann parallel zur vorhergehend erläuterten Auflagefläche orientiert sein. Die erste Oberfläche kann auch zumindest einen Teil der, bevorzugt jedoch die vollständige, vorhergehend erwähnte Auflagefläche ausbilden.

Allerdings ist es auch möglich, dass zwischen der ersten Oberfläche und der Auflagefläche mindestens ein Zwischenelement bzw. mindestens eine Zwischenschicht angeordnet ist. Das Zwischenelement/die Zwischenschicht kann hierbei durchlässig für Licht sein, insbesondere für Licht mit einem vorbestimmten Spektrum, weiter insbesondere für das von der mindestens einen Beleuchtungseinrichtung erzeugte Licht. Auch kann das Zwischenelement/die Zwischenschicht als optisches Element dienen, welches Eigenschaften, z.B. ein Spektrum, des durch das Zwischenelement/die Zwischenschicht hindurchstrahlenden Lichts verändert.

Weiter ist möglich, dass die erste Oberfläche derart mit einem Auflageelement der Vorrichtung, welches die Auflagefläche aufweist, optisch gekoppelt ist, dass Licht hin zur Auflagefläche durch die erste Oberfläche aus dem Lichtleitelement auskoppelbar ist.

Weiter ist mittels der Beleuchtungseinrichtung Licht in das Lichtleitelement einkoppelbar. Hierfür können das Lichtleitelement, insbesondere ein Einkoppelbereich des Lichtleitelements, und die mindestens eine Beleuchtungseinrichtung optisch derart verbunden sein, dass von der Beleuchtungseinrichtung erzeugtes Licht in das Lichtleitelement eingekoppelt werden kann. Insbesondere kann die Beleuchtungseinrichtung unmittelbar an einer äußeren Fläche, insbesondere einer Seitenfläche, weiter insbesondere an einem seitlichen Rand, des Lichtleitelements angeordnet sein.

Weiter ist Licht im Bereich der ersten Oberfläche aus dem Lichtleitelement hin zum Aufnahmevolumen auskoppelbar. Dies kann bedeuten, dass Licht aus dem Lichtleitelement durch die erste Oberfläche austritt.

Hierbei kann das Lichtleitelement, insbesondere die erste Oberfläche, vollflächig transmittiv für Licht sein, welches im Bereich der ersten Oberfläche aus dem Lichtleitelement hin zum Aufnahmevolumen ausgekoppelt wird. Dies kann bedeuten, dass Licht an jeder Stelle bzw. in jedem Bereich der ersten Oberfläche aus dem Lichtleitelement austreten kann. Mit anderen Worten existiert kein Bereich der ersten Oberfläche, der Licht aus dem Lichtleitelement nicht hindurchstrahlen lässt.

Bildet die erste Oberfläche die Auflagefläche aus, so ist hierdurch die Auflagefläche beleuchtbar. Dies bedeutet wiederum, dass ein auf der Auflagefläche angeordnetes Dokument beleuchtet werden kann. Bildet die erste Oberfläche nicht unmittelbar die Auflagefläche, so ist Licht hin zur Auflagefläche aus dem Lichtleitelement durch die erste Oberfläche auskoppelbar. In diesem Fall kann das ausgekoppelte Licht z.B. durch das vorhergehend erläuterte Zwischenelement/die vorhergehend erläuterte Zwischenschicht hin zu Auflagefläche strahlen.

Das von dem derart beleuchteten Dokument reflektierte und/oder gestreute Licht kann hierbei wieder durch die erste Oberfläche in das Lichtleitelement einkoppeln. Hierbei kann das Lichtleitelement derart ausgebildet sein, dass es für Licht, welches unter einem Winkel aus einem vorbestimmten Winkelbereich, beispielsweise einem Winkelbereich von 70° bis 110°, von außen auf die erste Oberfläche auftrifft, transparent, insbesondere vollständig transparent ist.

Weiter kann das Lichtleitelement im Bereich oder in einem Teilbereich der ersten Oberfläche für einen Luft-Lichtleitelement-Übergang für zumindest einen Teil des von der Beleuchtungseinrichtung erzeugten Lichts, insbesondere für einen Teil mit einem vorbestimmten Spektrum, vollständig reflektierend sein. Der Luft-Lichtleitelement-Übergang bezeichnet hierbei einen Übergang von Luft in das Lichtleitelement. In diesem Fall wird also Licht, welches von außen auf die erste Oberfläche trifft, vollständig reflektiert, d.h. total reflektiert, falls ein Luft-Lichtleitelement-Übergang an der Stelle vorliegt, an der das Licht auf das Lichtleitelement auftrifft. Weiter kann das Lichtleitelement im Bereich der ersten Oberfläche für den zumindest einen Teil des von der Beleuchtungseinrichtung erzeugten Lichts bei einem Medium-Lichtleitelement-Übergang unvollständig reflektierend sein, wobei das Medium ein von Luft verschiedenes Medium ist. Dies kann bedeuten, dass Licht, welches von außen auf die erste Oberfläche des Lichtleitelements trifft, unvollständig, insbesondere nicht, reflektiert wird und in das Lichtleitelement eintritt, falls ein Medium-Luft-Übergang an der Stelle vorliegt, an der das Licht auf das Lichtleitelement auftrifft. Hierbei kann das Medium ein Medium mit einem vorbestimmten Brechungsindex und einer vorbestimmten Ausbreitungsgeschwindigkeit für Licht sein, wobei der Brechungsindex und die Ausbreitungsgeschwindigkeit des Mediums von dem Brechungsindex bzw. von der Ausbreitungsgeschwindigkeit von Luft verschieden ist/sind. Das Medium kann auch ein Medium sein, dessen Brechungsindex in einem vorbestimmten Bereich von Brechungsindizes und/oder dessen Ausbreitungsgeschwindigkeit in einem vorbestimmten Bereich von Ausbreitungsgeschwindigkeiten liegt. Das Medium kann insbesondere ein Material des zu erfassenden Dokuments sein.

Die erste Oberfläche ist eine ebene und ungekrümmte Oberfläche. In dem Fall, dass die erste Oberfläche die Auflagefläche bildet, ergibt sich, dass im Bereich der ersten Oberfläche aus dem Lichtleitelement ausgekoppeltes Licht, welches außerhalb des Lichtleitelements auf den Prüfkörper trifft und von diesem zurück zur ersten Oberfläche reflektiert oder gestreut wird, nur dann durch die erste Oberfläche in das Lichtleitelement eintritt, falls ein Medium-Lichtleitelement-Übergang vorliegt, insbesondere in dem Bereich oder an der Stelle, in dem/an der das Licht auf die erste Oberfläche auftrifft. Falls ein Luft-Lichtleitelement-Übergang vorliegt, so kann das vom Dokument zurückreflektierte oder zurückgestreute Licht nicht in das Lichtleitelement eintreten. Ein Luft-Lichtleitelement-Übergang liegt insbesondere dann vor, wenn ein Teilbereich einer Oberfläche des Dokuments nicht unmittelbar an der ersten Oberfläche anliegt, beispielsweise weil das Dokument in diesem Bereich eine (relativ zur Auflagefläche oder ersten Oberfläche gesehene) Vertiefung aufweist.

Weiter umfasst die Vorrichtung mindestens eine Bilderfassungseinrichtung. Diese kann derart angeordnet und/oder ausgebildet sein, dass zumindest ein Teil des aus dem Lichtleitelement ausgekoppelten und von dem zu erfassenden Dokument reflektierten oder gestreuten Lichts von der Bilderfassungseinrichtung erfasst wird, wodurch ein Abbild des Dokuments erzeugt werden kann.

Da das Lichtleitelement geometrisch flach ausgeführt werden kann, ergibt sich in vorteilhafter Weise eine wenig Bauraum beanspruchende Beleuchtung des zu erfassenden Dokuments, wobei gleichzeitig eine möglichst homogene Beleuchtung des Dokuments möglich ist. Dies wiederum verhindert oder verringert Reflexionen, die eine Qualität der optischen Erfassung verringern können. Durch erfindungsgemäß ermöglichte kompakte Ausbildung kann die Vorrichtung einfach in bestehende Systeme, beispielsweise Terminals am Flughafen, integriert werden.

Weiter weist eine weitere Oberfläche mindestens einen erhabenen Bereich auf. Insbesondere weist die weitere Oberfläche mehrere erhabene Bereiche auf. Dies kann bedeuten, dass die weitere Oberfläche mindestens zwei, vorzugsweise jedoch mehr als zwei, erhabene Bereiche aufweist, wobei zwischen den mindestens zwei erhabenen Bereichen ein Zwischenbereich angeordnet ist. Der Zwischenbereich bildet somit eine Vertiefung zwischen erhabenen Bereichen. Ein erhabener Bereich kann einen von einer Grundfläche hervorstehenden Bereich bezeichnen.

Die erhabenen Bereiche können hierbei eine beliebige geometrische Form aufweisen. Insbesondere können die erhabenen Bereiche sphärisch, kubisch oder pyramidisch ausgebildet sein. Vorzugsweise weisen die erhabenen Bereiche eine (teil-)zylinderförmige Form auf. Eine freiliegende Stirnfläche des Zylinders kann hierbei eben oder (in Bezug auf die weitere Oberfläche) konkav oder konvex gewölbt sein oder als Freiform ausgebildet sein. Auch weitere Formen der Oberfläche der freiliegenden Stirnseite sind selbstverständlich vorstellbar.

Hierdurch ergibt sich in vorteilhafter Weise, dass Licht, welches durch die mindestens eine Beleuchtungseinrichtung in das Lichtleitelement einkoppelbar ist, nur in den erhabenen Bereichen derart umgelenkt wird, dass es durch die erste Oberfläche aus dem Lichtleitelement austreten kann. Die gewünschte optische Strahllenkung wird hierdurch in vorteilhafter Weise durch die Ausbildung der Oberflächenstruktur der weiteren Oberfläche erreicht.

Erfindungsgemäß nimmt ein Abstand zwischen benachbarten erhabenen Bereichen mit zunehmenden Abstand der erhabenen Bereiche von dem Einkoppelbereich ab.

Der Einkoppelbereich kann hierbei einen Bereich bezeichnen, in oder an dem Licht von der mindestens einen Beleuchtungseinrichtung in das Lichtleitelement eingekoppelt wird.

Ein Abstand zwischen benachbarten erhabenen Bereichen kann beispielsweise zwischen geometrischen Zentren oder zwischen zentralen Symmetrieachsen der erhabenen Bereiche gemessen werden. Der Abstand eines erhabenen Bereichs zu dem Einkoppelbereich kann ebenfalls zwischen geometrischen Zentren oder zwischen zentralen Symmetrieachsen des erhabenen Bereiches und Einkoppelbereichs gemessen werden. Ein Abstand kann insbesondere parallel zur ersten Oberfläche gemessen werden. Eine zentrale Symmetrieachse kann orthogonal zur ersten Oberfläche orientiert sein.

Ein Abstand zwischen benachbarten erhabenen Bereichen kann entlang einer Geraden bestimmt werden, die den Einkoppelbereich und die erhabenen Bereiche verbindet, wobei benachbarte erhabene Bereiche entlang der Geraden benachbart zueinander angeordnet sind.

Hierdurch ergibt sich in vorteilhafter Weise eine Verbesserung der Homogenität der Beleuchtung.

In einer weiteren Ausführungsform ist das Lichtleitelement derart ausgebildet, dass die erste Oberfläche mindestens einen, vorzugsweise jedoch mehrere, Auskoppelbereich(e) aufweist, wobei nur in dem mindestens einen Auskoppelbereich Licht aus dem Lichtleitelement auskoppelbar ist. Ein Auskoppelbereich ist hierbei ein Teilbereich der ersten Oberfläche und kann somit insbesondere geometrische Abmaße aufweisen, die kleiner als die korrespondierenden geometrischen Abmaße der ersten Oberfläche sind. Somit kann also nur in diskreten Bereichen Licht aus dem Lichtleitelement ausgekoppelt werden. Dies wiederum kann dazu führen, dass die Oberfläche eines Dokuments nur in bestimmten Bereichen beleuchtet wird, da nur Licht, welches in den Auskoppelbereichen austritt, von der Oberfläche des Dokuments zurückreflektiert oder -gestreut werden kann. Hierdurch ist es z.B. möglich, nur bestimmte Teilbereiche der Oberfläche des Dokuments zu beleuchten. Hierdurch wiederum lässt sich ein Kontrast bei der optischen Erfassung verbessern, da eine Überlagerung der von verschiedenen Bereichen der Oberfläche des Prüfkörpers zurückreflektierten oder -gestreuten Strahlung verringert wird.

In einer weiteren Ausführungsform weist das Lichtleitelement eine weitere Oberfläche auf, wobei die weitere Oberfläche eine der ersten Oberfläche gegenüberliegende Oberfläche des Lichtleitelements ist, wobei der mindestens eine Auskoppelbereich durch eine Ausbildung, insbesondere eine Oberflächenstruktur, der weiteren Oberfläche festgelegt ist.

Durch die Festlegung der Auskoppelbereiche an der ersten Oberfläche durch die Ausbildung, insbesondere die Ausbildung einer Oberflächenstruktur, der zweiten Oberfläche kann vorteilhafter Weise vermieden werden, die vorzugsweise ebene Oberflächenstruktur der ersten Oberflächenstruktur zu verändern. Auch ist nicht erforderlich, im Bereich der ersten Oberfläche zusätzliche optische Elemente, z.B. Filterelemente oder Abdeckelemente, vorzusehen.

In einer weiteren Ausführungsform ist eine Oberflächenstruktur der weiteren Oberfläche derart ausgebildet, dass nur in mindestens einem, vorzugsweise aber mehreren, vorbestimmten Bereich(en) der weiteren Oberfläche das mittels der Beleuchtungseinrichtung eingekoppelte Licht derart in Richtung der ersten Oberfläche lenkbar ist, dass es durch die erste Oberfläche aus dem Lichtleitelement austritt. Insbesondere ist der mindestens eine vorbestimmte Bereich der weiteren Oberfläche derart ausgebildet, dass Licht nur in dem mindestens einen Auskoppelbereich durch die erste Oberfläche austritt.

Das Lichtleitelement kann hierbei derart ausgebildet sein, dass Licht nur dann durch die erste Oberfläche aus dem Lichtleitelement austreten kann, falls das Licht mit einem vorbestimmten Winkel oder mit einem Winkel aus einem vorbestimmten Winkelbereich, beispielsweise zwischen 70° und 110°, relativ zur ersten Oberfläche auf die erste Oberfläche auftrifft.

Hierdurch ergibt sich in vorteilhafter Weise, dass die Auskoppelbereiche auf der ersten Oberfläche durch eine geometrische Ausbildung der Oberflächenstruktur der weiteren Oberfläche festgelegt werden können. Dies wiederum bedingt, wie nachfolgend näher erläutert, eine vereinfachte Herstellung des Lichtleitelements.

In einer weiteren Ausführungsform ist das Lichtleitelement, insbesondere die erste und/oder die weitere Oberfläche, vollflächig transmittiv für Licht, welches im Bereich der ersten Oberfläche aus dem Lichtleitelement hin zum Aufnahmevolumen ausgekoppelt und von dem Dokument reflektiert wird. Dies kann bedeuten, dass Licht, welches von dem Dokument unter Beleuchtung von dem Lichtleitelements reflektiert wird, durch das Lichtleitelement hindurchstrahlen kann, beispielsweise hin zu einer Bilderfassungseinrichtung. Hierbei kann das reflektierte Licht an jeder Stelle der ersten Oberfläche in das Lichtleitelement eintreten, durch das Lichtleitelement hindurchstrahlen und an jeder Stelle der weiteren Oberfläche aus dem Lichtleitelement austreten. Mit anderen Worten existiert kein Bereich der ersten und/oder der weiteren Oberfläche, der vom Dokument reflektiertes Licht nicht hindurchstrahlen lässt.

Der Begriff "vollflächig" kann sich hierbei auf den Bereich der ersten und/oder weiteren Oberfläche beziehen, der zur Lichtauskopplung vorgesehen ist.

Hierdurch ergibt sich in vorteilhafter Weise eine qualitativ hochwertige optische Erfassung des Dokuments.

In einer weiteren Ausführungsform weist die weitere Oberfläche mindestens zwei erhabene Bereiche auf, wobei zwischen den mindestens zwei erhabenen Bereichen ein Zwischenbereich angeordnet ist, wobei in dem Zwischenbereich ein lichtundurchlässiges Element angeordnet ist. Insbesondere kann das lichtundurchlässige Element den Zwischenbereich vollständig ausfüllen. Hierdurch wird in vorteilhafter Weise eine Verschmutzung des Lichtleitelements im Bereich der weiteren Oberfläche verhindert. Das lichtundurchlässige Element kann insbesondere undurchlässig für Licht mit einem vorbestimmten Spektrum, beispielsweise für zumindest einen Teil des von der mindestens einen Beleuchtungseinrichtung erzeugten Lichts, sein.

Weiter wird durch die Anordnung eines lichtundurchlässigen Elements im Zwischenbereich gewährleistet, dass von dem Prüfkörper zurückreflektiertes oder -gestreutes Licht, welches durch die erste Oberfläche in das Lichtleitelement eintritt, im Bereich der weiteren Oberfläche nur durch die erhabenen Bereiche wieder aus dem Lichtleitelement austreten kann. Dies vereinfacht die optische Erfassung des vorhergehend erläuterten, nicht von der ersten Oberfläche reflektierten Lichts, insbesondere durch eine Bilderfassungseinrichtung. Diese kann hierfür beispielsweise auf der Seite der weiteren Oberfläche angeordnet sein, wobei die weitere Oberfläche im Erfassungsbereich der Bilderfassungseinrichtung liegt.

Somit wird durch die Anordnung der Zwischenbereiche eine optische Auflösung der Vorrichtung beeinflusst.

In einer weiteren Ausführungsform weist das Lichtleitelement im Bereich der weiteren Oberfläche mindestens ein optisches Element auf oder bildet ein solches optisches Element aus. Das optische Element kann hierbei ein Element zur Strahlführung, insbesondere zur Strahllenkung, sein. Beispielsweise kann das optische Element eine Linsenfunktion aufweisen. Weiter insbesondere kann das optische Element durch eine Ausbildung bzw. eine geometrische Form des erhabenen Bereichs ausgebildet oder bereitgestellt werden.

Hierdurch können in vorteilhafter Weise auch Sicherheitsmerkmale auf dem Dokument inspiziert werden, die an einer speziellen, insbesondere vorbestimmten, Position auf dem Dokument angeordnet sind. Auch kann in vorteilhafter Weise eine erforderliche Leistung der mindestens einen Beleuchtungseinrichtung reduziert werden.

Weiter kann die Beleuchtung der Oberfläche des Dokuments oder eines vorbestimmten Teils der Oberfläche mit mindestens einem vorbestimmten Beleuchtungsparameter erfolgen, der z.B. abhängig von einem Sicherheitsmerkmal ist. Ein Beleuchtungsparameter kann beispielsweise eine vorbestimmten Beleuchtungsrichtung, eine vorbestimmte Polarisation, eine vorbestimmte Lichtfarbe oder ein weiterer vorbestimmter Beleuchtungsparameter sein. Hierbei ist es möglich, dass der mindestens eine vorbestimmte Beleuchtungsparameter zumindest teilweise durch das mindestens eine optische Element eingestellt wird.

In einer weiteren Ausführungsform sind die Auskoppelbereiche derart angeordnet, dass eine optische Erfassung mit einer vorbestimmten Auflösung möglich ist. Alternativ oder kumulativ können auch die erhabenen Bereiche der weiteren Oberfläche derart angeordnet und/oder ausgebildet sein, dass die optische Erfassung mit einer vorbestimmten Auflösung möglich ist.

In einer weiteren Ausführungsform weist das Lichtleitelement eine maximale Höhe auf. Eine Höhe kann hierbei einen Abstand zwischen der weiteren Oberfläche, insbesondere zwischen einer Grundfläche oder zwischen einem freien Ende eines erhabenen Bereichs, und der ersten Oberfläche des Lichtleitelements bezeichnen, welche beispielsweise entlang einer Richtung senkrecht zur ersten Oberfläche gemessen wird. Eine maximale Höhe kann beispielsweise 4 mm betragen. Insbesondere kann das Lichtleitelement folienartig ausgebildet sein.

Hierdurch ergibt sich in vorteilhafter Weise eine besonders einfache Ausbildung des Lichtleitelements mit geringen geometrischen Abmaßen.

In einer weiteren Ausführungsform nimmt ein Abstand zwischen benachbarten Auskoppelbereichen mit zunehmenden Abstand des Auskoppelbereichs vom Einkoppelbereich ab. Ein Abstand zwischen benachbarten Auskoppelbereichen kann beispielsweise zwischen geometrischen Zentren oder zwischen zentralen Symmetrieachsen der Auskoppelbereiche gemessen werden. Der Abstand eines Auskoppelbereichs zu dem Einkoppelbereich kann ebenfalls zwischen geometrischen Zentren oder zwischen zentralen Symmetrieachsen des Auskoppelbereichs und Einkoppelbereichs gemessen werden. Ein Abstand kann insbesondere parallel zur ersten Oberfläche gemessen werden.

Ein Abstand zwischen benachbarten Auskoppelbereichen kann entlang einer Geraden bestimmt werden, die den Einkoppelbereich und die Auskoppelbereiche verbindet, wobei benachbarte Auskoppelbereiche entlang der Geraden benachbart zueinander angeordnet sind.

Hierdurch ergibt sich in vorteilhafter Weise eine Verbesserung der Homogenität der Beleuchtung. Die durch den wachsenden Abstand vom Einkoppelbereich bedingte Abnahme der Intensität des aus dem Lichtleitelement ausgekoppelten Lichts wird durch die dichtere Anordnung von Auskoppelbereichen zumindest teilweise, bevorzugt vollständig, kompensiert.

In einer weiteren Ausführungsform ist die erste Oberfläche des mindestens einen Lichtleitelements senkrecht zu der Auflagefläche angeordnet ist. Dies kann bedeuten, dass die erste Oberfläche und die Auflagefläche orthogonal zueinander orientiert sind. Weiter ist das Lichtleitelement in einer gemeinsamen Projektionsebene in einem Randbereich der Auflagefläche oder außerhalb der Auflagefläche angeordnet. Die gemeinsame Projektionsebene kann parallel zur Auflagefläche orientiert sein. Ein Randbereich kann hierbei einen Teilbereich der Auflagefläche bezeichnen, der an deren Rand angeordnet ist und z.B. eine Breite von maximal 10%, 20% oder 30% der Breite der Auflagefläche aufweist. Weiter ist die erste Oberfläche der Auflagefläche zugewandt. Diese bedeutet, dass in der gemeinsamen Projektionsebene Licht aus dem Lichtleitelement hin zur Auflagefläche, insbesondere hin zu einem Zentrum der Auflagefläche, auskoppelbar ist.

Vorzugsweise ist das mindestens eine Lichtleitelement auf einer dem Aufnahmevolumen abgewandten Seite der Auflagefläche angeordnet. In diesem Fall kann das durch die erste Oberfläche ausgekoppelte Licht in ein Beleuchtungsvolumen strahlen, welches bezüglich der Auflagefläche auf der dem Aufnahmevolumen gegenüberliegenden Seite angeordnet ist. Durch dieses Beleuchtungsvolumen kann auch ein auf der Auflagefläche angeordnetes Dokument erfasst werden. In diesem Fall können Strahlengänge zur Erfassung des Dokuments durch das Beleuchtungsvolumen verlaufen.

Beispielsweise kann/können ein oder mehrere Lichtleitelemente am Rand des Beleuchtungsvolumens angeordnet sein. Weiter beispielsweise kann das mindestens eine Lichtleitelement in einem Gehäuse angeordnet werden, wobei das Gehäuse auch das vorhergehend erläuterte Beleuchtungsvolumen aufweist oder ausbildet.

Insbesondere kann das durch die erste Oberfläche ausgekoppelte Licht über das Beleuchtungsvolumen und/oder über mindestens ein(e) vorhergehend erläuterte(s) Zwischenelement/ Zwischenschicht und/oder durch ein Auflageelement der Vorrichtung, welches die Auflagefläche aufweist, hin zur Auflagefläche strahlen. Hierbei kann z.B. die erste Oberfläche, insbesondere der mindestens eine Auskoppelbereich, derart ausgebildet sein, dass eine Strahlrichtung des aus dem mindestens einen Lichtleitelement ausgekoppelten Lichts nicht ausschließlich parallel zur Auflagefläche verläuft, sondern mindestens einen Richtungsanteil aufweist, der zur Auflagefläche orientiert ist. Vorzugsweise ist die erste Oberfläche, insbesondere der mindestens eine Auskoppelbereich, derart ausgebildet, dass eine Strahlrichtung des aus dem mindestens einen Lichtleitelement ausgekoppelten Lichts möglichst vollständig oder gar vollständig hin zur Auflagefläche orientiert ist.

Hierdurch ergibt sich in vorteilhafter Weise, dass das mindestens eine Lichtleitelement eine Dokumentenerfassung nicht oder nur minimal stört.

Weiter vorgeschlagen wird ein Verfahren zur optischen Erfassung eines Dokuments, insbesondere eines Sicherheitsdokuments.

Das vorgeschlagene Verfahren wird hierbei mittels einer Vorrichtung gemäß einer der in dieser Erfindung beschriebenen Ausführungsformen durchgeführt.

Das Verfahren umfasst folgende Verfahrensschritte: Das Dokument wird auf eine Auflagefläche eines Aufnahmevolumens der Vorrichtung aufgelegt. Weiter wird Licht in ein Lichtleitelement eingekoppelt. Weiter wird Licht im Bereich einer ersten Oberfläche aus dem Lichtleitelement hin zum Aufnahmevolumen ausgekoppelt.

Hierdurch ergibt sich in vorteilhafter Weise eine homogene Beleuchtung des zu erfassenden Dokuments, wobei gleichzeitig ein Bauraum minimiert wird.

In einer weiteren Ausführungsform wird Licht nur in mindestens einem Auskoppelbereich, vorzugsweise in mehreren Auskoppelbereichen, der ersten Oberfläche aus dem Lichtleitelement ausgekoppelt. Hierdurch kann ein Kontrast bei der optischen Erfassung verbessert werden.

Weiter kann Licht mit verschiedenen Spektren erzeugt und in das Lichtleitelement eingekoppelt werden, wodurch auch das Dokument mit Licht dieser verschiedenen Spektren beleuchtet wird. Hierfür kann die mindestens eine Beleuchtungseinrichtung Licht mit verschiedenen Spektren erzeugen. Selbstverständlich können auch mehrere Beleuchtungseinrichtungen vorgesehen sein, die jeweils Licht mit voneinander verschiedenen Spektren erzeugen, wobei jede Beleuchtungseinrichtung Licht in das Lichtleitelement einkoppeln kann. Licht verschiedener Spektren kann hierbei gleichzeitig oder sequentiell in das Lichtleitelement eingekoppelt werden.

Beispielsweise kann Weißlicht erzeugt werden. Alternativ oder kumulativ kann Licht im Infrarotbereich, insbesondere im nahen Infrarotbereich erzeugt werden. Dieses Licht kann beispielsweise Wellenlängen von 780 nm bis 1mm, weiter insbesondere Wellenlängen von 780 nm bis 3µm, weiter insbesondere von 780 nm bis 1900 nm, weiter insbesondere 1100 nm bis 1900 nm aufweisen. Weiter alternativ kann Licht im UV-Bereich, insbesondere im UV-A-Bereich erzeugt werden. Dieses Licht kann beispielsweise Wellenlängen von 190 nm bis 380 nm, weiter insbesondere Wellenlängen von 315 nm bis 380 nm aufweisen.

Weiter vorgeschlagen wird ein Verfahren zur Herstellung einer Vorrichtung zur optischen Erfassung eines Dokuments, insbesondere eines Sicherheitsdokuments. Das Verfahren kann hierbei zur Herstellung einer Vorrichtung gemäß einer der in dieser Erfindung beschriebenen Ausführungsformen dienen. Hierbei wird mindestens ein Aufnahmevolumen mit einer Aufnahmefläche bereitgestellt. Weiter werden mindestens eine Beleuchtungseinrichtung und mindestens ein Lichtleitelement bereitgestellt. Die Beleuchtungseinrichtung und das mindestens eine Lichtleitelement werden derart optisch verbunden, dass Licht der Beleuchtungseinrichtung in das Lichtleitelement einkoppelbar ist. Das Lichtleitelement wird derart bereitgestellt, dass das Lichtleitelement eine erste Oberfläche aufweist, wobei Licht im Bereich der ersten Oberfläche aus dem Lichtleitelement hin zum Aufnahmevolumen auskoppelbar ist.

Hierbei ist die erste Oberfläche eine ebene und ungekrümmte Oberfläche. Weiter weist eine weitere Oberfläche des Lichtleitelements mindestens einen erhabenen Bereich auf. Weiter nimmt ein Abstand von benachbarten erhabenen Bereichen mit zunehmenden Abstand von einem Einkoppelbereich für das Licht ab.

Hierdurch ergibt sich in vorteilhafter Weise ein Verfahren zur Herstellung einer Vorrichtung zur optischen Erfassung eines Dokuments mit minimalen Bauraumbedarf, welche gleichzeitig eine möglichst homogene des Dokuments ermöglichen.

In einer weiteren Ausführungsform wird eine weitere Oberfläche des Lichtleitelements bereitgestellt, wobei mindestens ein Auskoppelbereich der ersten Oberfläche durch eine Ausbildung der weiteren Oberfläche, insbesondere eine Ausbildung einer Oberflächenstruktur der weiteren Oberfläche, festgelegt ist. Die weitere Oberfläche kann hierbei insbesondere durch Prägen geformt und somit bereitgestellt werden. Hierdurch ergibt sich in vorteilhafter Weise eine einfache Herstellung der vorgeschlagenen Vorrichtung.

Die Erfindung wird anhand eines Ausführungsbeispiels näher erläutert. Die Figuren zeigen:
- Fig. 1: einen schematischen Querschnitt durch eine erfindungsgemäße Vorrichtung
- Fig. 2: eine schematische Seitenansicht einer erfindungsgemäßen Vorrichtung in einer weiteren Ausführungsform und
- Fig. 3: einen schematischen Querschnitt durch eine erfindungsgemäße Vorrichtung in einer weiteren Ausführungsform.

Nachfolgend bezeichnen gleiche Bezugszeichen Elemente mit gleichen oder ähnlichen technischen Merkmalen.

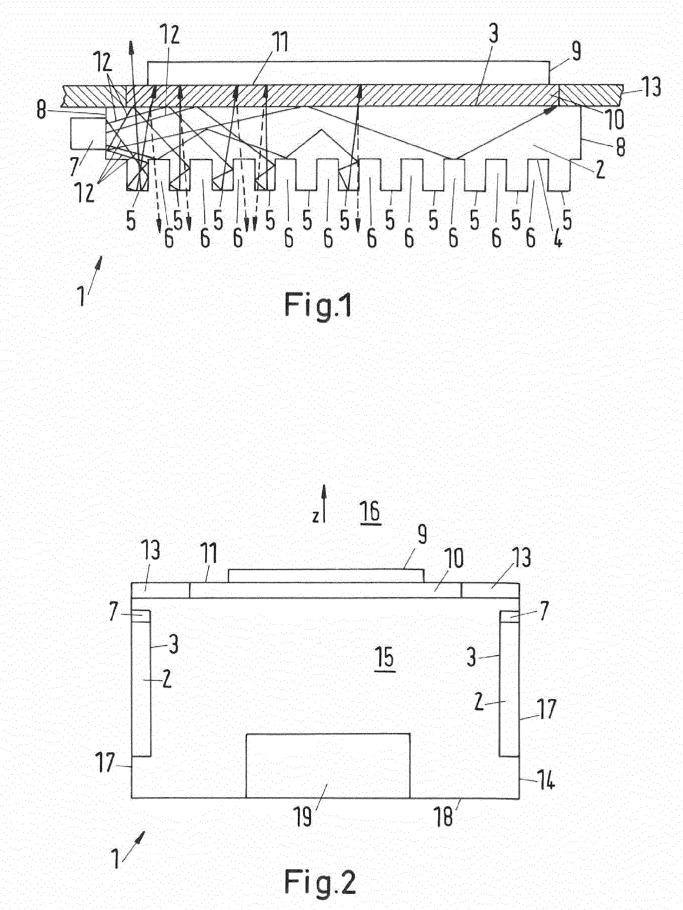

In Fig. 1 ist eine schematische Seitenansicht einer erfindungsgemäßen Vorrichtung 1 dargestellt. Die Vorrichtung 1 umfasst ein als Folie 2 ausgebildetes Lichtleitelement mit einer ersten Oberfläche 3 und einer weiteren Oberfläche 4. Die erste Oberfläche 3 ist als ebene und ungekrümmte Fläche ausgebildet. Die weitere Oberfläche 4 weist eine unebene Oberflächenstruktur auf. Insbesondere weist die weitere Oberfläche 4 zylinderförmige, erhabene Bereiche 5 auf. Zwischen den erhabenen Bereichen 5 sind Zwischenbereiche 6 angeordnet. Weiter umfasst die Vorrichtung 1 eine Beleuchtungseinrichtung 7, die an einem seitlichen Rand 8 der Folie 2 angeordnet ist. Von der Beleuchtungseinrichtung 7 erzeugtes Licht ist am seitlichen Rand 8 in die Folie 2 einkoppelbar.

Auf der ersten Oberfläche 3 ist eine als Glasscheibe 10 ausgebildete Zwischenschicht angeordnet, die durchlässig für das im Bereich der ersten Oberfläche 3 aus der Folie 2 ausgekoppelte Licht und für das von einem Dokument 9 hin zur ersten Oberfläche 3 reflektierte oder gestreute Licht ist.

Die Glasscheibe 10 weist eine Auflagefläche 11 für das zu erfassende Dokument 9 auf, wobei die Auflagefläche 11 parallel zur ersten Oberfläche 3 orientiert ist. Weiter dargestellt ist eine Gehäusewand 13, die die Glasscheibe 10 an seitlichen Rändern der Glasscheibe 10 begrenzt.

Weiter dargestellt sind verschiedene exemplarische Strahlengänge von Lichtstrahlen 12 des in die Folie 2 eingekoppelten Lichts. Es ist ersichtlich, dass Licht an der ersten Oberfläche 3 nur in bestimmten Auskoppelbereichen ausgekoppelt wird, wobei die Auskoppelbereiche durch Ausbildung der weiteren Oberfläche 4, insbesondere die Anordnung und Ausbildung der erhabenen Bereiche 5, festgelegt sind. Hierbei ist die Oberflächenstruktur der weiteren Oberfläche 4 durch die Ausbildung und Anordnung der erhabenen Bereiche 5 und der Zwischenbereiche 6 derart ausgebildet, dass nur im Bereich der erhabenen Bereiche 5 das mittels der Beleuchtungseinrichtung 7 eingekoppelte Licht derart in Richtung der ersten Oberfläche 3 gelenkt wird, dass es durch die erste Oberfläche 3 in Richtung der Auflagefläche 11 austritt.

Die Lichtstrahlen 12 werden durch die erhabenen Bereiche 5 insbesondere derart umgelenkt, dass sie mit einem Winkel aus einem vorbestimmten Winkelbereich, beispielsweise zwischen 70° und 110°, auf die erste Oberfläche 3 treffen und hierdurch durch die erste Oberfläche 3 aus der Folie 2 austreten können. Hierbei können nur Lichtstrahlen 12 aus der Folie 2 austreten, wenn sie unter einem Winkel aus diesem Winkelbereich auf die erste Oberfläche 3 treffen.

Weiter ist dargestellt, dass vom Dokument 9 hin zu ersten Oberfläche 3 reflektierte und/oder gestreute Lichtstrahlen 12 durch die erste Oberfläche 3 wieder in die Folie 2 eintreten und durch die weitere Oberfläche 4 wieder aus der Folie 2 austreten.

Somit treten diese Lichtstrahlen 12 durch die Folie 2 hindurch. Hierbei kann eine nicht dargestellte Bilderfassungseinrichtung 13 auf der Seite der weiteren Oberfläche 4 angeordnet sein und diese Lichtstrahlen 12 erfassen.

Weiter können die zylinderförmig erhabenen Bereiche 5 in einer regelmäßigen Struktur angeordnet sein. Ein Abstand zwischen den erhabenen Bereichen 5 kann beispielsweise ein Abstand zwischen zentralen Symmetrieachsen der zylinderförmigen Bereiche 5 sein, wobei der Abstand parallel zur ersten Oberfläche 3 gemessen wird. Der Abstand zwischen den erhabenen Bereichen 5 ist hierbei derart gewählt, dass mindestens eine gewünschte Reflexionsauflösung und somit auch, abhängig von Erfassungsparametern einer Bilderfassungseinrichtung, auch eine gewünschte optische Auflösung eines Abbildes erreichbar ist. Beispielsweise können die Abstände derart gewählt werden, dass eine optische Auflösung mit mindestens 500 dpi erreichbar ist. Auch kann der Abstand zwischen benachbarten erhabenen Bereichen 5 mit zunehmenden Abstand der erhabenen Bereiche 5 vom seitlichen Rand 8 abnehmen. Wird Licht von beiden seitlichen Rändern 8 eingekoppelt, so kann der Abstand zwischen benachbarten erhabenen Bereichen 5 mit zunehmenden Abstand der erhabenen Bereiche 5 von einem der seitlichen Ränder 8 bis hin zu einer Mitte zwischen den seitlichen Rändern 8 abnehmen und dann mit weiter zunehmenden Abstand der erhabenen Bereiche 5 von dem seitlichen Rand 8 (und somit abnehmenden Abstand zum verbleibenden seitlichen Rand 8) wieder zunehmen.

Die Bilderfassungseinrichtung kann ein Objektiv und ein Sensorelement, beispielsweise einen CCD-Sensor, umfassen.

Die Folie 2 kann insbesondere eine mikrooptische Struktur aufweisen. Die in Fig. 1 dargestellte Ausführungsform ermöglicht eine möglichst homogene Beleuchtung des Dokuments 9. Durch die direkte Beleuchtung des Dokuments 9 mit kurzen Strahlengängen kann auch eine Erfassungszeit verkürzt werden. Insbesondere ergibt sich eine flächige Beleuchtung des Dokuments 9 ermöglicht, wodurch Reflexionen, insbesondere sogenannte Spots, vermieden werden. Weiter ist ersichtlich, dass aufgrund der flachen Ausbildung des Lichtleitelements ein Bauraumbedarf für die Vorrichtung gering ist.

In Fig. 2 ist eine schematische Seitenansicht einer erfindungsgemäßen Vorrichtung 1 in einer weiteren Ausführungsform dargestellt. Dargestellt ist ein Gehäuse 14, welches an einer Oberseite eine Gehäusewand 13 aufweist. Weiter ist an der Oberseite eine Glasscheibe 10 angeordnet, wobei seitliche Ränder der Glasscheibe 10 von der Gehäusewand 13 begrenzt sind. Das Gehäuse 14 weist ein Innenvolumen 15 auf, wobei das Innenvolumen 15 auch als Beleuchtungsvolumen bezeichnet werden kann.

Das Gehäuse 14 ist hierbei im Wesentlichen quaderförmig ausgebildet.

An zwei der vier seitlichen Gehäusewände 17 ist jeweils ein Lichtleitelement 2 angeordnet. Hierbei können die Lichtleitelemente 2 an der jeweiligen seitlichen Gehäusewand 17 mechanisch befestigt oder festgelegt sein, z.B. über geeignete Befestigungsmittel und/oder Führungsmittel. Selbstverständlich ist es möglich, dass nur an einer seitlichen Gehäusewand 17 oder an mehr als zwei Gehäusewänden 17, beispielsweise an drei oder vier seitlichen Gehäusewänden 17, jeweils ein Lichtleitelement 2 angeordnet ist. Auch ist vorstellbar, dass an einer Bodenseite 18 des Gehäuses 14 ein Lichtleitelement 2 angeordnet ist.

Weiter dargestellt ist eine erste Raumrichtung z, wobei die erste Raumrichtung z in Fig. 2 von unten nach oben orientiert ist. Die erste Raumrichtung z kann insbesondere eine vertikale Raumrichtung z sein. Über der Auflagefläche 11 ist ein Außenvolumen 16 angeordnet, welches insbesondere das Aufnahmevolumen umfassen kann. Das Innenvolumen 15 ist daher unter der Auflagefläche 11 angeordnet.

Die Lichtleitelemente 2 sind hierbei ebenfalls unter der Auflagefläche 11 angeordnet. Weiter sind die Lichtleitelemente 2 derart angeordnet, dass eine erste Oberfläche 3 des jeweiligen Lichtleitelements 2 senkrecht zu der Auflagefläche 11 angeordnet ist. Weiter sind die Lichtleitelemente 2 in einer gemeinsamen Projektionsebene, die orthogonal zu der ersten Raumrichtung z orientiert ist, außerhalb der Auflagefläche 11 angeordnet, wobei jedoch die erste Oberfläche 3 jeweils der Auflagefläche 11 zugewandt ist.

Somit kann Licht aus den Lichtleitelementen 2 durch die ersten Oberflächen 3 hindurch in das Innenvolumen 15 ausgekoppelt werden. Aus dem Innenvolumen 15 kann das derart ausgekoppelte Licht durch die Glasscheibe 10 hindurch auf das zu beleuchtende Dokument 9 strahlen.

Auf einer Bodenseite 18 des Gehäuses 14 ist ein Spiegel 19 angeordnet, der von dem derart beleuchteten Dokument 9 reflektiertes und/oder gestreutes Licht hin zu einer Bilderfassungseinrichtung (nicht dargestellt) umlenkt, z.B. in eine Richtung, die in die Zeichenebene hinein oder aus der Zeichenebene heraus orientiert ist. Die Bilderfassungseinrichtung kann innerhalb oder außerhalb des Gehäuses 14 angeordnet sein.

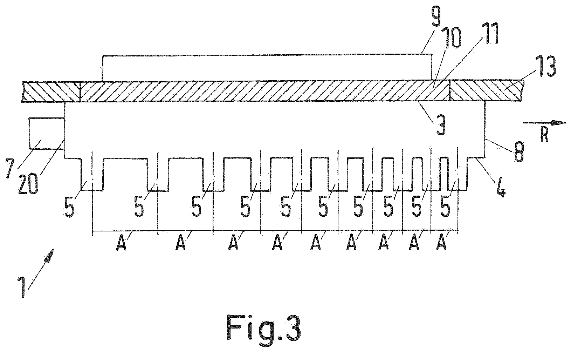

In Fig. 3 ist eine schematische Seitenansicht einer erfindungsgemäßen Vorrichtung 1 in einer weiteren Ausführungsform dargestellt.

Die in Fig. 3 dargestellte Ausführungsform entspricht in großen Teilen der in Fig. 1 dargestellten Ausführungsform, daher kann auf die entsprechenden Erläuterungen verwiesen werden. Im Unterschied zu der in Fig. 1 dargestellten Ausführungsform ist dargestellt, dass ein Abstand A von benachbarten erhabenen Bereichen 5 mit zunehmenden Abstand von einem Einkoppelbereich 20 für das Licht abnimmt. Der Abstand A von benachbarten erhabenen Bereichen 5 wird hierbei entlang einer Richtung R gemessen, die parallel zu der ersten Oberfläche 3 orientiert ist. Weiter ist dargestellt, dass der Abstand A zwischen benachbarten erhabenen Bereichen 5 einen Abstand entlang der Richtung R als Abstand zwischen zentralen Symmetrieachsen der erhabenen Bereiche 5 erfasst wird.

Weiter kann die Folie 2 zumindest in dem Bereich der Folie 2, der unter bzw. an der Glasscheibe 10 angeordnet ist, vollflächig transmittiv für Licht sein, welches im Bereich der ersten Oberfläche 3 aus der Folie hin zur Glasscheibe 10 ausgekoppelt und von dem Dokument 9 reflektiert wird. Somit kann vom Dokument 10 reflektiertes Licht an jeder Stelle dieses Bereichs der Folie 2 durch die Folie 2 hindurchstrahlen und an der weiteren Oberfläche 4 wieder aus der Folie 2 hin zu einer Bilderfassungseinrichtung (nicht in Fig. 3 dargestellt) austreten.

### Bezugszeichenliste

- 1: Vorrichtung
- 2: Folie
- 3: erste Oberfläche
- 4: weitere Oberfläche
- 5: erhabener Bereich
- 6: Zwischenbereich
- 7: Beleuchtungseinrichtung
- 8: seitlicher Rand
- 9: Dokument
- 10: Glasscheibe
- 11: Auflagefläche
- 12: Lichtstrahl
- 13: Gehäusewand
- 14: Gehäuse
- 15: Innenvolumen
- 16: Außenvolumen
- 17: seitliche Gehäusewand
- 18: Bodenseite
- 19: Spiegel

## Patentansprüche

1. Vorrichtung zur optischen Erfassung eines Dokuments (9), wobei die Vorrichtung (1) mindestens eine Bilderfassungseinrichtung (13) umfasst, wobei die Vorrichtung (1) mindestens ein Aufnahmevolumen mit einer Auflagefläche (11) für das zu erfassende Dokument (9) aufweist oder ausbildet, wobei die Vorrichtung (1) mindestens eine Beleuchtungseinrichtung (7) umfasst, wobei die Vorrichtung (1) mindestens ein Lichtleitelement umfasst, wobei das Lichtleitelement eine erste Oberfläche (3) aufweist, wobei mittels der Beleuchtungseinrichtung (7) Licht in das Lichtleitelement einkoppelbar und im Bereich der ersten Oberfläche (3) aus dem Lichtleitelement hin zum Aufnahmevolumen auskoppelbar ist, wobei die erste Oberfläche (3) eine ebene und ungekrümmte Oberfläche (3) ist, **dadurch gekennzeichnet, dass** eine weitere Oberfläche (4) des Lichtleitelements mindestens einen erhabenen Bereich (5) aufweist, wobei ein Abstand von benachbarten erhabenen Bereichen (5) mit zunehmenden Abstand von einem Einkoppelbereich für das Licht abnimmt.

2. Vorrichtung nach Anspruch 1, **dadurch gekennzeichnet, dass** das Lichtleitelement derart ausgebildet ist, dass die erste Oberfläche (3) mindestens einen Auskoppelbereich aufweist, wobei nur in dem mindestens einen Auskoppelbereich Licht aus dem Lichtleitelement auskoppelbar ist.

3. Vorrichtung nach Anspruch 2, **dadurch gekennzeichnet, dass** das Lichtleitelement eine weitere Oberfläche (4) aufweist, wobei die weitere Oberfläche (4) eine der ersten Oberfläche (3) gegenüberliegende Oberfläche des Lichtleitelements ist, wobei der mindestens eine Auskoppelbereich durch eine Ausbildung der weiteren Oberfläche (4) festgelegt ist.

4. Vorrichtung nach Anspruch 3, **dadurch gekennzeichnet, dass** eine Oberflächenstruktur der weiteren Oberfläche (4) derart ausgebildet ist, dass nur in mindestens einem vorbestimmten Bereich der weiteren Oberfläche (4) das mittels der Beleuchtungseinrichtung (7) eingekoppelte Licht derart in Richtung der ersten Oberfläche (3) lenkbar ist, dass es aus der ersten Oberfläche (3) austritt.

5. Vorrichtung nach einem der Ansprüche 1 bis 4, **dadurch gekennzeichnet, dass** das Lichtleitelement vollflächig transmittiv für Licht ist, welches im Bereich der ersten Oberfläche (3) aus dem Lichtleitelement hin zum Aufnahmevolumen ausgekoppelt und von dem Dokument (9) reflektiert wird.

6. Vorrichtung nach einem der Ansprüche 1 bis 5, **dadurch gekennzeichnet, dass** die weitere Oberfläche (4) mindestens zwei erhabene Bereiche (5) aufweist, wobei zwischen den mindestens zwei erhabenen Bereichen (5) ein Zwischenbereich (6) angeordnet ist, wobei in dem Zwischenbereich (6) ein lichtundurchlässiges Element angeordnet ist.

7. Vorrichtung nach einem der Ansprüche 1 bis 6, **dadurch gekennzeichnet, dass** das Lichtleitelement im Bereich der weiteren Oberfläche (4) mindestens ein optisches Element aufweist oder ausbildet.

8. Vorrichtung nach einem der Ansprüche 2 bis 7, **dadurch gekennzeichnet, dass** die Auskoppelbereiche und/oder die erhabenen Bereiche (5) derart angeordnet sind, dass eine optische Erfassung mit einer vorbestimmten Auflösung möglich ist.

9. Vorrichtung nach einem der Ansprüche 1 bis 8, **dadurch gekennzeichnet, dass** das Lichtleitelement ein maximale Höhe aufweist.

10. Vorrichtung nach einem der Ansprüche 2 bis 9, **dadurch gekennzeichnet, dass** ein Abstand von benachbarten Auskoppelbereichen mit zunehmenden Abstand von einem Einkoppelbereich für das Licht abnimmt.

11. Vorrichtung nach einem der Ansprüche 1 bis 10, **dadurch gekennzeichnet, dass** die erste Oberfläche (3) des mindestens einen Lichtleitelements senkrecht zu der Auflagefläche (11) angeordnet ist, wobei das Lichtleitelement in einer gemeinsamen Projektionsebene in einem Randbereich der Auflagefläche (11) oder außerhalb der Auflagefläche (11) angeordnet ist und die erste Oberfläche (3) der Auflagefläche (11) zugewandt ist.

12. Verfahren zur optischen Erfassung eines Dokuments (9), wobei das Dokument (9) auf eine Auflagefläche (9) eines Aufnahmevolumens einer Vorrichtung gemäß einer der Ansprüche 1 bis 11 aufgelegt wird,
**dadurch gekennzeichnet, dass**
Licht in ein Lichtleitelement eingekoppelt wird, wobei Licht im Bereich einer ersten Oberfläche (3) des Lichtleitelements aus dem Lichtleitelement hin zum Aufnahmevolumen ausgekoppelt wird.

13. Verfahren nach Anspruch 12, **dadurch gekennzeichnet, dass** Licht nur in mindestens einem Auskoppelbereich aus dem Lichtleitelement ausgekoppelt wird.

14. Verfahren zur Herstellung einer Vorrichtung (1) zur optischen Erfassung eines Dokuments (9), wobei mindestens eine Bilderfassungseinrichtung (13) bereitgestellt wird, wobei mindestens ein Aufnahmevolumen mit einer Auflagefläche (11) bereitgestellt wird, wobei mindestens eine Beleuchtungseinrichtung (7) und mindestens ein Lichtleitelement bereitgestellt wird, wobei die Beleuchtungseinrichtung (7) und das mindestens eine Lichtleitelement derart optisch verbunden werden, dass Licht in das Lichtleitelement einkoppelbar ist, wobei das Lichtleitelement derart bereitgestellt wird, dass das Lichtleitelement eine erste Oberfläche (3) aufweist, wobei Licht im Bereich der ersten Oberfläche (3) aus dem Lichtleitelement hin zum Aufnahmevolumen auskoppelbar ist, wobei die erste Oberfläche (3) eine ebene und ungekrümmte Oberfläche (3) ist, **dadurch gekennzeichnet, dass** eine weitere Oberfläche (4) des Lichtleitelements mindestens einen erhabenen Bereich (5) aufweist,
wobei
ein Abstand von benachbarten erhabenen Bereichen (5) mit zunehmenden Abstand von einem Einkoppelbereich für das Licht abnimmt.

15. Verfahren nach Anspruch 14, **dadurch gekennzeichnet, dass** eine weitere Oberfläche (4) des Lichtleitelements bereitgestellt wird, wobei mindestens ein Auskoppelbereich der ersten Oberfläche (3) durch eine Ausbildung der weiteren Oberfläche (4) festgelegt ist.

## Claims

1. Apparatus for optically detecting a document (9), wherein the apparatus (1) comprises at least one image detecting device (13), wherein the apparatus (1) comprises or forms at least one receiving volume with a resting surface (11) for the document (9) which is to be detected, wherein the apparatus (1) comprises at least one lighting device (7), wherein the device (1) comprises at least one light-guiding element, wherein the light-guiding element exhibits a first surface (3), wherein, by means of the lighting device (7), light can be coupled into the light-guiding element and in the region of the first surface (3) can be coupled out of the light-guiding element towards the receiving volume, wherein the first surface (3) is a flat and non-cambered surface (3), **characterised in that** a further surface (4) of the light-guiding element exhibits at least one raised region (5), wherein a distance between adjacent raised regions (5) decreases as a distance from a coupling-in region for the light increases.

2. Apparatus according to claim 1, **characterised in that** the light-guiding element is configured in such a way that the first surface (3) comprises at least one region for coupling out the light, wherein it is only in the at least one coupling-out region that light can be coupled out of the light-guiding element.

3. Apparatus according to claim 2, **characterised in that** the light-guiding element exhibits a further surface (4), wherein the further surface (4) is a surface of the light-guiding element opposite the first surface (3), wherein the location of the at least one coupling-out region is determined by a formation of the further surface (4).

4. Apparatus according to claim 3, **characterised in that** a surface structure of the further surface (4) is configured in such a way that only in at least one predetermined region of the further surface (4) can the light which is coupled in by means of the lighting device (7) be guided in the direction of the first surface (3) in such a way that it emerges from the first surface (3).

5. Apparatus according to any one of claims 1 to 4, **characterised in that** the light-guiding element is transmissive over its full surface for light which is coupled out of the light-guiding element in the region of the first surface (3) towards the receiving volume and reflected from the document (9).

6. Apparatus according to any one of claims 1 to 5, **characterised in that** the further surface (4) exhibits at least two raised regions (5), wherein an intermediate region (6) is arranged between the at least two raised regions (5), wherein a light-impermeable element is arranged in the intermediate region (6).

7. Apparatus according to any one of claims 1 to 6, **characterised in that** the light-guiding element exhibits or forms at least one optical element in the region of the further surface (4).

8. Apparatus according to any one of claims 2 to 7, **characterised in that** the coupling-out regions and/or the raised regions (5) are arranged in such a way that an optical detection with a predetermined resolution is possible.

9. Apparatus according to any one of claims 1 to 8, **characterised in that** the light-guiding element has a maximum height.

10. Apparatus according to any one of claims 2 to 9, **characterised in that** a distance of adjacent coupling-out regions decreases with an increasing distance from a coupling-in region for the light.

11. Apparatus according to any one of claims 1 to 10, **characterised in that** the first surface (3) of the at least one light-guiding element is arranged perpendicular to the resting surface (11), wherein the light-guiding element is arranged in a common projection plane in a peripheral region of the resting surface (11) or outside the resting surface (11) and the first surface (3) faces the resting surface (11).

12. Method for optically detecting a document (9), wherein the document (9) is laid on a resting surface (11) of a receiving volume of an apparatus according to any one of claims 1 to 11, **characterised in that** light is coupled into a light-guiding element, wherein light is coupled out of the light-guiding element, in a region of a first surface (3) of the light-guiding element, towards the receiving volume.

13. Method according to claim 12, **characterised in that** light is coupled out of the light-guiding element only in at least one coupling-out region.

14. Method for producing an apparatus (1) for optically detecting a document (9), wherein at least one image detecting device (13) is provided, wherein at least one receiving volume with a resting surface (11) is provided, wherein at least one lighting device (7) and at least one light-guiding element are provided, wherein the lighting device (7) and the at least one light-guiding element are optically connected in such a way that light can be coupled into the light-guiding element, wherein the light-guiding element is provided in such a way that the light-guiding element exhibits a first surface (3), wherein light can be coupled out of the light-guiding element, in the region of the first surface (3) towards the receiving volume, wherein the first surface (3) is a flat and non-cambered surface (3), **characterised in that** a further surface (4) of the light-guiding element exhibits a raised region (5),
wherein
a distance between adjacent raised regions (5) decreases as a distance from a coupling-in region for the light increases.

15. Method according to claim 14, **characterised in that** a further surface (4) of the light-guiding element is provided, wherein the location of at least one coupling-out region of the first surface (3) is determined by a formation of the further surface (4).

## Revendications

1. Dispositif de capture optique d'un document (9), dans lequel le dispositif (1) comprend au moins un système de capture d'image (13), dans lequel le dispositif (1) présente ou réalise au moins un volume de réception avec une surface de support (11) pour le document (9) à capturer, dans lequel le dispositif (1) comprend au moins un système d'éclairage (7), dans lequel le dispositif (1) comprend au moins un élément de guidage de lumière, dans lequel l'élément de guidage de lumière présente une première surface (3), dans lequel de la lumière peut être injectée dans l'élément de guidage de lumière au moyen du système d'éclairage (7) et peut être découplée hors de l'élément de guidage de lumière vers le volume de réception dans la zone de la première surface (3), dans lequel la première surface (3) est une surface (3) plane et non incurvée, **caractérisé en ce qu'**une autre surface (4) de l'élément de guidage de lumière présente au moins une zone en relief (5),
dans lequel une distance entre des zones en relief (5) adjacentes diminue à mesure que la distance par rapport à une zone d'injection pour la lumière augmente.

2. Dispositif selon la revendication 1, **caractérisé en ce que** l'élément de guidage de lumière est réalisé de telle manière que la première surface (3) présente au moins une zone de découplage, dans lequel de la lumière provenant de l'élément de guidage de lumière peut être découplée seulement dans l'au moins une zone de découplage.

3. Dispositif selon la revendication 2, **caractérisé en ce que** l'élément de guidage de lumière présente une autre surface (4), dans lequel l'autre surface (4) est une surface, faisant face à la première surface (3), de l'élément de guidage de lumière, dans lequel l'au moins une zone de découplage est fixée par une conformation de l'autre surface (4).

4. Dispositif selon la revendication 3, **caractérisé en ce qu'**une structure de surface de l'autre surface (4) est réalisée de telle manière que la lumière injectée au moyen du système d'éclairage (7) peut être dirigée en direction de la première surface (3) seulement dans au moins une zone prédéfinie de l'autre surface (4) de telle manière qu'elle sort de la première surface (3).

5. Dispositif selon l'une des revendications 1 à 4, **caractérisé en ce que** l'élément de guidage de lumière est transmissif sur toute la surface pour de la lumière, laquelle est découplée hors de l'élément de guidage de lumière en direction du volume de réception dans la zone de la première surface (3) et est réfléchie par le document (9) .

6. Dispositif selon l'une des revendications 1 à 5, **caractérisé en ce que** l'autre surface (4) présente au moins deux zones en relief (5), dans lequel une zone intermédiaire (6) est disposée entre les au moins deux zones en relief (5), dans lequel un élément ne laissant pas passer la lumière est disposé dans la zone intermédiaire (6).

7. Dispositif selon l'une des revendications 1 à 6, **caractérisé en ce que** l'élément de guidage de lumière présente ou réalise au moins un élément optique dans la zone de l'autre surface (4).

8. Dispositif selon l'une des revendications 2 à 7, **caractérisé en ce que** les zones de découplage et/ou les zones en relief (5) sont disposées de telle manière qu'une capture optique est possible avec une résolution prédéfinie.

9. Dispositif selon l'une des revendications 1 à 8, **caractérisé en ce que** l'élément de guidage de lumière présente une hauteur maximale.

10. Dispositif selon l'une des revendications 2 à 9, **caractérisé en ce qu'**une distance entre des zones de découplage adjacentes diminue au fur et à mesure que la distance par rapport à une zone d'injection pour la lumière augmente.

11. Dispositif selon l'une des revendications 1 à 10, **caractérisé en ce que** la première surface (3) de l'au moins un élément de guidage de lumière est disposée de manière perpendiculaire par rapport à la surface de support (11), dans lequel l'élément de guidage de lumière est disposé dans un plan de projection commun dans une zone de bord de la surface de support (11) ou à l'extérieur de la surface de support (11) et la première surface (3) est tournée vers la surface de support (11).

12. Procédé de capture optique d'un document (9), dans lequel le document (9) est placé sur une surface de support (9) d'un volume de réception d'un dispositif selon l'une des revendications 1 à 11,
**caractérisé en ce que**
de la lumière est injectée dans un élément de guidage de lumière, dans lequel de la lumière est découplée hors de l'élément de guidage de lumière en direction du volume de réception dans la zone d'une première surface (3) de l'élément de guidage de lumière.

13. Procédé selon la revendication 12, **caractérisé en ce que** de la lumière est découplée hors de l'élément de guidage de lumière seulement dans au moins une zone de découplage.

14. Procédé de fabrication d'un dispositif (1) de capture optique d'un document (9), dans lequel au moins un système de capture d'image (13) est fourni, dans lequel au moins un volume de réception est fourni avec une surface de support (11), dans lequel au moins un système d'éclairage (7) et au moins un élément de guidage de lumière sont fournis, dans lequel le système d'éclairage (7) et l'au moins un élément de guidage de lumière sont reliés de manière optique de telle manière que de la lumière peut être injectée dans l'élément de guidage de lumière, dans lequel l'élément de guidage de lumière est fourni de telle manière que l'élément de guidage de lumière présente une première surface (3), dans lequel de la lumière peut être découplée hors de l'élément de guidage de lumière vers le volume de réception dans la zone de la première surface (3), dans lequel la première surface (3) est une surface (3) plane et non incurvée, **caractérisé en ce que** une autre surface (4) de l'élément de guidage de lumière présente au moins une zone en relief (5),
dans lequel
une distance entre des zones en relief (5) adjacentes diminue à mesure que la distance par rapport à une zone d'injection pour la lumière augmente.

15. Procédé selon la revendication 14, **caractérisé en ce qu'**une autre surface (4) de l'élément de guidage de lumière est fournie, dans lequel au moins une zone de découplage de la première surface (3) est fixée par une conformation de l'autre surface (4).
